Europäisches Patentamt

European Patent Office

Office européen des brevets

(11) Publication number: **0 381 418**
**A2**

# EUROPEAN PATENT APPLICATION

(21) Application number: 90300910.8

(51) Int. Cl.⁵: **G06F 15/411**

(22) Date of filing: 29.01.90

(30) Priority: 31.01.89 US 304695

(43) Date of publication of application:
08.08.90 Bulletin 90/32

(84) Designated Contracting States:
DE FR GB

(71) Applicant: **International Business Machines**
**Corporation**
**Old Orchard Road**
**Armonk, N.Y. 10504(US)**

(72) Inventor: **Smith, Todd Allen**
**1802 Apricot Glen**
**Austin, Texas 78746(US)**
Inventor: **Urquhart, Robert John**
**9210 Mystic Oaks Trail**
**Austin, Texas 78750(US)**

(74) Representative: **Bailey, Geoffrey Alan**
**IBM United Kingdom Limited Intellectual**
**Property Department Hursley Park**
**Winchester Hampshire SO21 2JN(GB)**

(54) A small fast lookup table for use in a data processing system.

(57) The offset hashing lookup table of this invention locates entries in a lookup table faster than previously known methods that were as space efficient, while requiring less space than previously known methods that were as fast.

In the offset hashing lookup table of this invention, the data of information is sorted in a first vector of entries according to the hash value of a key for each entry in the table. The possible range of hash values ranges from 0 to the number of entries minus 1, (N-1). In addition, an offset vector is utilized which has the same number of entries as the first vector of entries. The offset vector is constructed such that at any given position "i" from 0 to N-1 within the offset vector, the sum of the contents at that position "i" and "i" is an index of the first entry of the first vector which has a hash value greater than or equal to "i". In the first vector, all the entries with the same hash value are contiguous, and bounded by the offsets found in the offset table at position h(key) and h-(key) + 1.

FIG. 5B

EP 0 381 418 A2

## A SMALL, FAST LOOKUP TABLE FOR USE IN A DATA PROCESSING SYSTEM

This invention relates to a lookup table for use in a data processing system.

In many areas in data processing programs information is stored or set aside for use later on in the program. This information may describe attributes of objects being processed by the data processing program, such as names of customers, suppliers, etc. Lookup tables are frequently used as the data structures to store this information.

Lookup tables known in the art will now be described with reference to a selection of the accompanying drawings in which:

Figure 1 illustrates a sequential search lookup table known in the art.

Figure 2 illustrates a simple lookup table known in the art in which the data is sorted in ascending order.

Figures 3A - 3J illustrate the method of creating an open addressing hashing lookup table known in the art.

Figure 3K illustrates the resulting value of the hash function for each of the keys for use with the open addressing hashing lookup table of Figures 3A - 3J.

Figure 4A illustrates the resulting value of the hash function for each of the keys for use with the linked hashing lookup table of Figures 4B -4J known in the art.

Figures 4B - 4J illustrate the method of creating a linked hashing lookup table known in the art.

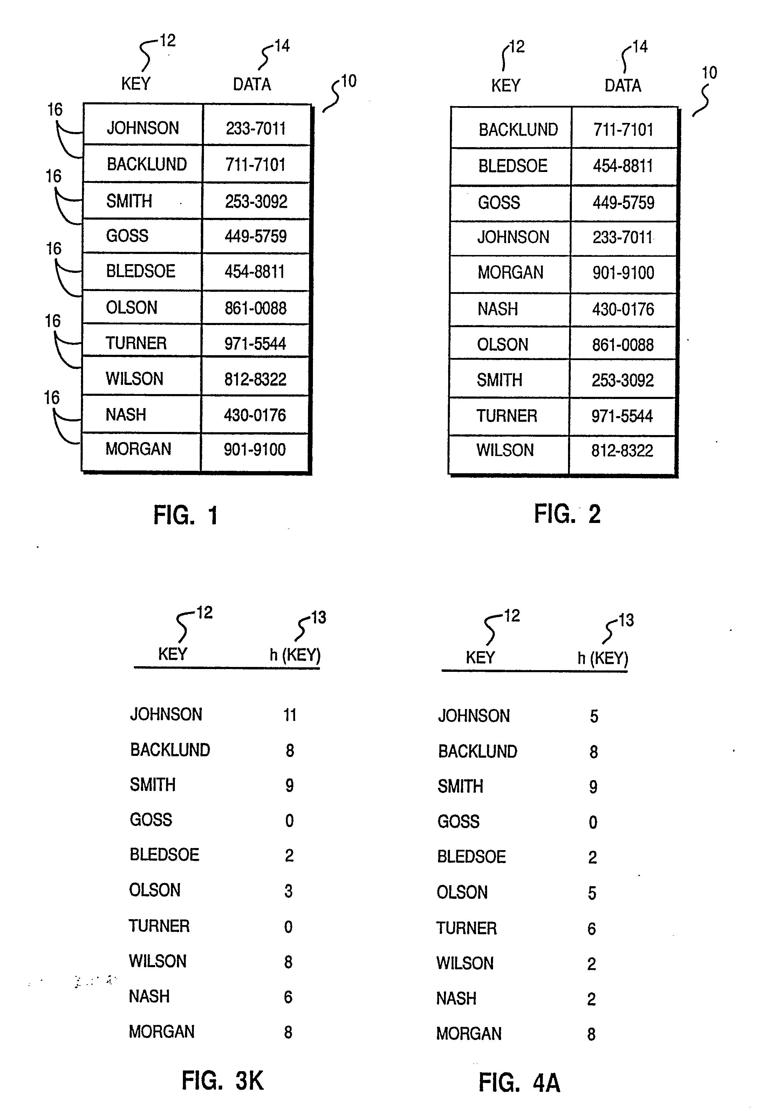

As shown in Fig. 1 and Fig. 2, a lookup table 10 has entries 16, and each entry has a key 12. In addition to the key 12, each entry holds the additional information 14 that has been set aside. The example in Fig. 1 and Fig. 2 has last names as the key 12, and the corresponding phone number as the additional information, i.e. data 14, for the key 12. Some of the most fundamental operations that can be performed on lookup tables are:

INSERT Insert a new entry into the table.

DELETE Delete an existing table entry.

FIND Find all (or first) entries with a given key.

These terms are used generically herein as other phrases may be used in other systems to perform the same functions.

In situations where FIND is performed more frequently than INSERT or DELETE, it is worth optimizing the implementation of the lookup table so that FIND operations are performed fast even at the expense of slower INSERT's or DELETE's. Furthermore, while FIND is a fundamental operation for lookup tables, INSERT and DELETE are not necessary for many applications.

Various data structure organizations are known in the art that address the problem of efficient information retrieval. As shown in Fig. 1, a very simple lookup table organization keeps the entries 16 stored sequentially in a list. Searching such a table 10 involves examining each entry starting with the first until an entry with the desired key 12 is found. This results in an unnecessarily slow search since undesired entries are searched each time. In a table of N entries, on the average, N/2 entries will be examined before finding the sought entry. Furthermore, all N entries must be examined before discovering that the desired key is not present in the table. However, this table organization is not without merit. It is simple, and does not waste any space, consuming storage space proportional to only N times the size of an entry. Some methods are available to speed the search of sequential lookup tables, as in "Method For Table Search Processing", IBM Technical Disclosure Bulletin, Vol. 17, No. 4., September 1984, page 964-965. However, the search time remains proportional to N, the size of the table.

An improvement in the efficiency of searching lookup tables is achieved by keeping the data stored in a sequential table sorted in ascending or descending key orders. For example, as shown in Fig. 2, the data 14 is stored according to the alphabetical ascending order of the last names, i.e. the key 12. Tables organized in this way need only be searched until it is clear that all remaining entries have keys larger than the sought for key. Therefore, the time to locate an entry is N/2 on the average, and the time to determine that an entry with the desired key is not in the table is also N/2, on the average. This search technique is referred to herein as a sorted linear search.

An even faster search strategy is available with such sorted sequential lookup tables. This search technique is called binary search. By using binary search, the efficiency of the FIND operation is greatly enhanced. At all times during a binary search, a range of table entries is maintained. The sought for key is either in this range or not in the table. Initially, this range covers the entire table. At each step during a binary search, the middle entry of the range is examined. If it has the sought for key, the search is complete. If not, the range is adjusted so that the middle entry is the lower bound or the upper bound for the new range depending on the results of the comparison between the middle entry's key value and the sought for key. Next, the new middle entry for the new range is examined. At each step the range is bisected; this operation is repeated until there are no table entries left in the range or the desired key is found. At each step, the number of entries in the range is cut in half, therefore this search terminates in time proportional to the logarithm of N. This lookup table organization is compact, requiring space proportional to only N times the size of an entry. However, it requires reorganization of the entries each time an INSERT or DELETE is performed. As previously mentioned, it is usually more important to optimize the FIND operation. A description of the binary search technique can be found in "Table Look-Up", IBM Technical Disclosure Bulletin, Vol. 14, No. 10, March 1972.

An even faster lookup table organization is to use "hashing". In hashing based lookup tables, the first step in inserting an entry into the table is to hash the entry's key. This involves applying a hash function to the key which returns a randomized value, depending on the key, in a range between 0 and M-1, where M is the maximum number of entries in the table. A good hash function will produce entirely different values for two similar keys. After obtaining the hash value, H, for the entry to be inserted, the entry is inserted into the table at the first vacant location at or following the location identified by H. The important FIND operation can be performed very rapidly by hashing the sought for key and immediately beginning the search in the table at that location. Some searching is required because multiple keys may hash to the same index. By keeping 10-20% of the tables entries unused, the amount of secondary searching can be kept to a minimum at the expense of memory. This hash lookup table method has FIND operations faster than the previously described binary search technique, as long as the table is not completely full.

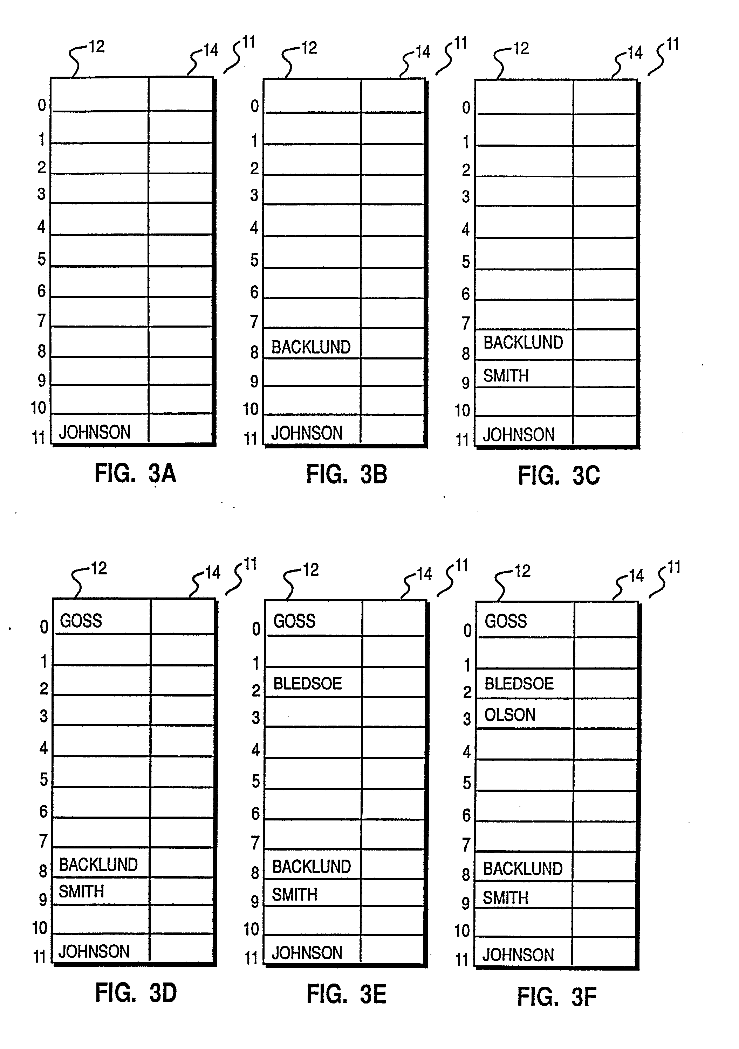

An example of a hashing based lookup table is shown in Fig. 3A -Fig. 3J as an open addressing hashing lookup table 11. The table 11 has 12 entries, numbered 0-11, i.e. M-1, which is 20% more entries than the data 14 fills, Fig. 3J. The hashed based lookup table 11 applies the following hash function 13 to hash the last names, i.e., the key 12:

Hash Function

$$\overline{f(A) = 1, \ f(B) = 2},...f(Z) = 26$$
$$\text{hash}("ABC") = (f(A) + f(B) + f(C)) \bmod 12$$

The meaning of this hash function is that each letter of a last name is given a value from 1 to 26, corresponding to that letter's position in the alphabet. The value of each of the letters in the last name are added. When the summation reaches the value of 11, the summation wraps back around to the values of 0 - 11. The resulting hash function values for the last names, key 12, are shown in Fig. 3K.

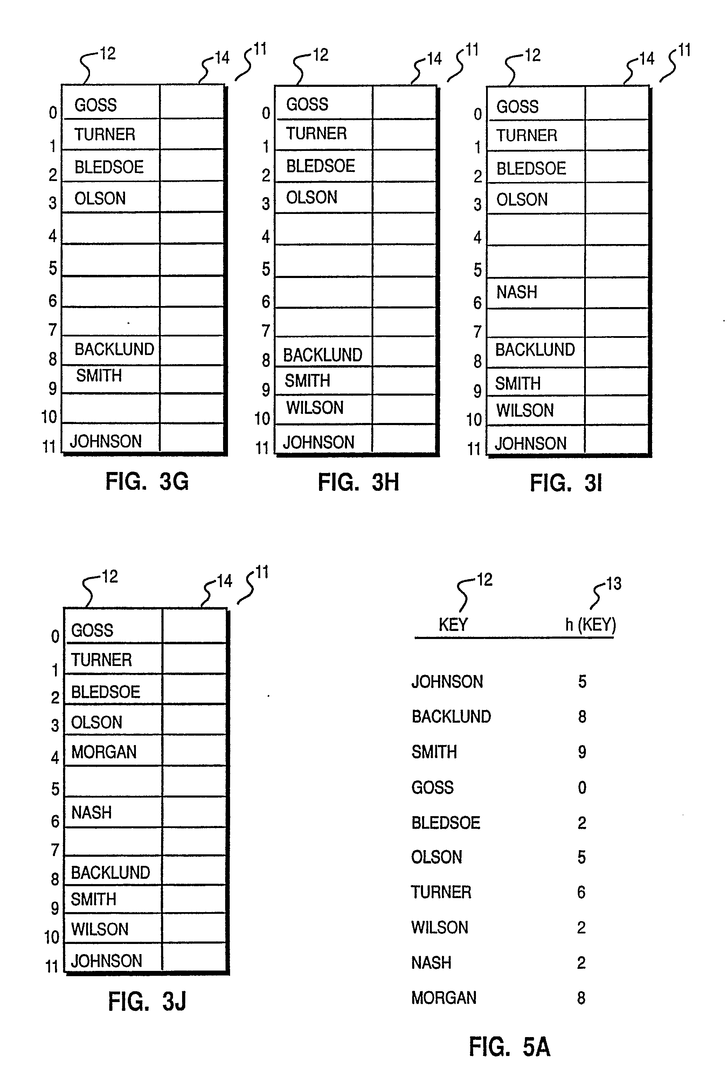

Inserting data 14 into the table is accomplished as follows. Since "Johnson" was hashed first, it is inserted into the table 11, along with its corresponding data 14, at location 11, as shown in Fig. 3A. Likewise, the following names and associated data 14 are inserted into the table 11 as follows: Backlund at the 8th location, Fig. 3B; Smith at the 9th location, Fig. 3C; Goss at the 0th location, Fig. 3D; Bledsoe at the 2nd location, Fig. 3E; and Olson at the 3rd location, Fig. 3F. However, since the hash function applied to "Turner" also resulted in a value of 0, "Turner" is placed in the first vacant location following the 0th location. Since "Goss" occupies the 0th location, the next vacant location is the 1st location, as shown in Fig. 3G. Likewise, the hash function applied to "Wilson", also resulted in the same hash value of 8 as the hash function applied to "Backlund", Fig. 3K. Since "Smith" occupies the 9th location, the first vacant location following the 8th location is the 10th location, Fig. 3H. Next, the hash function is applied to "Nash" to get the value of "6", Fig. 3K. Therefore, the key "Nash" and its associated data 14 are inserted at the 6th location, Fig. 3I. Finally, when the hash function is applied to "Morgan", the value is "8". Since "Backlund" previously hashed to the value of "8", the first vacant location following the 8th location is sought for. Since the 9th, 10th, and 11th locations are already occupied by "Smith", "Wilson", and "Johnson", respectively, the next vacant location is sought for continuing from the 0th location. Since the 0th, 1st, 2nd, and 3rd locations have been occupied by "Goss", "Turner", "Bledsoe", and "Olson", the first vacant location following the 8th location is the 4th location, Fig. 3J.

With reference to Fig. 3J, a FIND operation is performed as follows. If the sought for key is "Smith", the hash function is applied to "Smith" resulting in a value of "9". The FIND operation immediately goes to the 9th location and finds the sought for key, "Smith" and its corresponding data 14. Likewise, if the sought for key is "Morgan", the hash function is applied to "Morgan" resulting in a value of "8". However, when the FIND operation immediately goes to the 8th location, the sought for key is not there. Additional searching is required starting at the 8th location to locate the sought for key "Morgan".

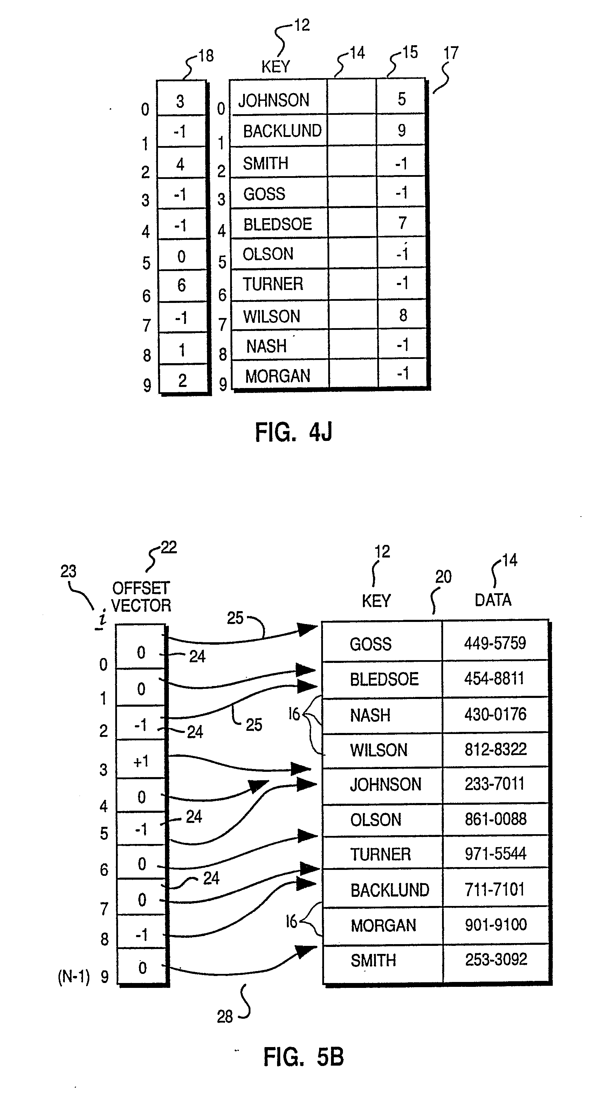

An alternative hashing scheme links entries in the table with the same hash value, as shown in Fig. 4A - 4J. In this method, M linked lists of entries 18 are maintained. The sought for key is hashed to a value in the range 0 to M-1, as shown in Fig. 4A. The corresponding linked list is searched for an entry which has the desired key. The time to locate an entry using this technique is N/(2M) on the average, since a good hash function will evenly distribute the N entries over the M lists. Although very fast, this method requires additional space in each entry to hold the link to the next entry an the list.

Figures 4A to 4J illustrate a linked hashing lookup table method. For this example, each key 12, Fig. 4A is hashed according to the following hash function.

Hash Function

$\overline{f(A) = 1}, f(B) = 2,...f(Z) = 26$
hash("ABC") = (f(A) + f(B) + f(C)) mod 10

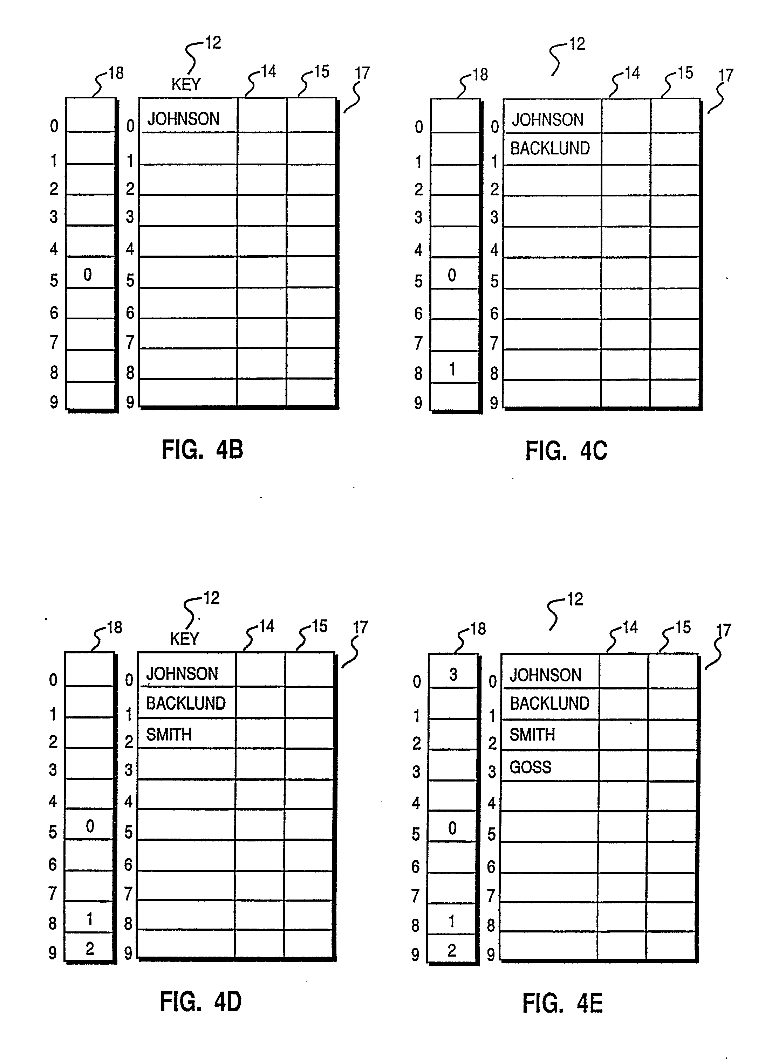

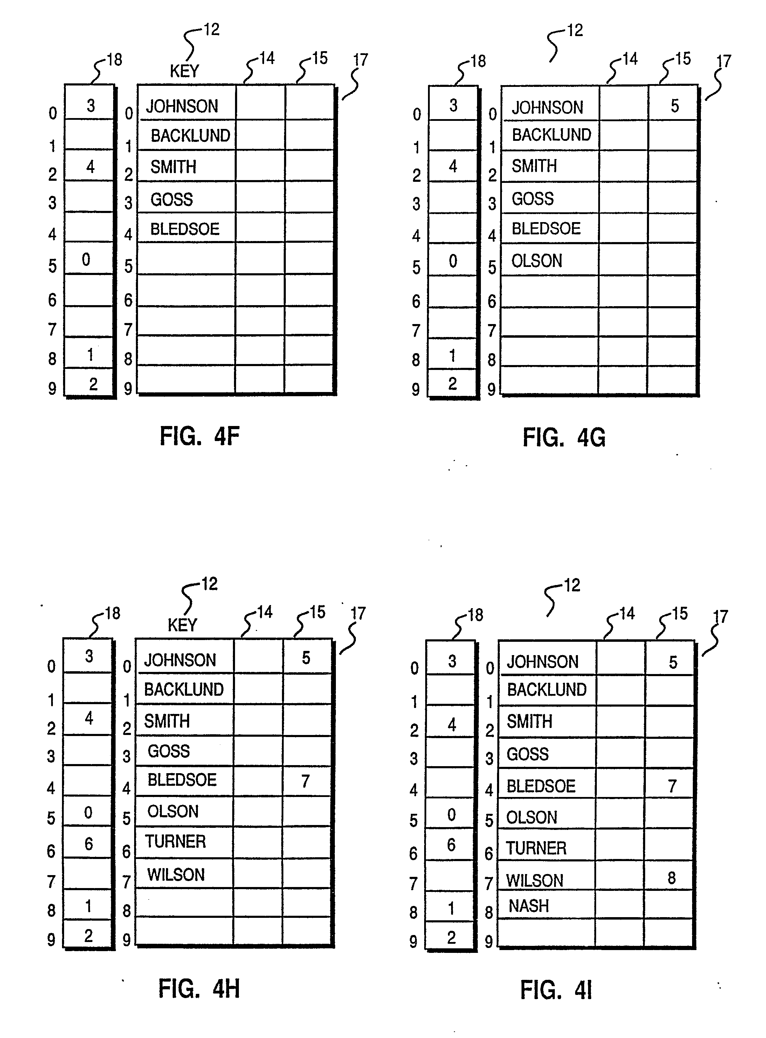

The resulting values from the hash function 13 are listed in Fig. 4A. Since "Johnson" resulted in a hash value of "5", the 5th entry of the linked list 18 of entries contains a "0" to indicate that the key "Johnson" and the corresponding data are at the 0th location of the table 17, Fig. 4B. Likewise, since "Backlund" resulted in a hash value of "8", the 8th entry of the linked list 18 contains a "1" to indicate that the key "Backlund" and the corresponding data are at the lst location of the table 17, Fig. 4C. This procedure is likewise repeated for the keys "Smith", "Goss", and "Bledsoe", Figures 4D, 4E, and 4F. However, "Olson" results in a hash value of "5" which is the same hash value for "Johnson" which is located at the 0th location. Therefore, at the 0th location, a link 15 having a value of "5" links the hash value of "0" to "Olson" at the 5th location of the table 17, Fig. 4G. Similarly, the hash value of "Wilson" results in the same value of "2" as for "Bledsoe", Fig. 4A. Since the 2nd location of the linked list 18 already references the 4th location of the table 17 with "Bledsoe", the 4th location contains a link 15 having a value of "7" to reference the location in the table 17 where "Wilson can be found, Fig. 4H. Likewise, since "Nash" also hashes to the value of "2", the 2nd location of the linked list 18 references the 4th location for "Bledsoe", the 4th location has a link value of 7 to reference "Wilson", and this 7th location has a link value of 8 to finally reference the sought for key "Nash", Fig. 4I. The completed table for these 10 entries are as shown in Fig. 4J.

Other variations on this hashing technique are describe in the following articles; "Indexing Method Employing Hashing", IBM Technical Disclosure Bulletin, Vol. 16, No. 3, August 1973; "Improved Hash and Index Searching Techniques for Computers Using a Cache and/or Virtual Memory", IBM Technical Disclosure Bulletin, Vol. 31, No. 1, June 1988; and "Hash Trees", IBM Technical Disclosure Bulletin, Vol. 30, No. 5, October 1987.

Accordingly the present invention provides a data processing system comprising:
means for hashing a key for each of a plurality (N) of entries of information to be stored in the data processing system;
means for storing said information in a first vector of said entries in a sorted order according to each resulting hash pointer of said hashed keys; and
means for creating a vector of offsets for combining with the hash pointer of a sought-for key to determine a set of locations, in said table, having all data elements with corresponding hash pointers equal to the hash pointer corresponding to the sought-for key.

The present invention also provides a data processing system comprising:
means for storing a plurality of data elements in a table, wherein each of the data elements includes a retrieval key;
means for determining a plurality of calculated hash pointers, wherein a calculated hash pointer corresponding to each of the plurality of data elements is calculated from the retrieval key of that data element, and wherein each calculated hash pointer is one of a predetermined selection of possible hash pointer values;
means for sorting the table of data elements in a numerical order according to hash pointer corresponding to each data element, thereby producing a sorted table; and
means for calculating an offset vector having a plurality of entries, wherein each calculated hash pointer value relates to a corresponding entry in the offset vector, and wherein each individual entry comprises a numerical offset pointer, said offset pointer being dependent upon that entry's corresponding calculated hash pointer value and upon the address, in the sorted table, of a data element at a boundary of the one or more data elements having said corresponding calculated hash pointer value.

The present invention further provides a method for storing information in a data processing system, said method comprising:
hashing a key for each of a plurality (N) of entries of said information to a hash pointer;
storing said information in a first vector of said entries in a sorted order according to each resulting hash pointer of said hashed keys; and
creating a vector of offsets for combining with the hash pointer of a sought-for key to determine a set of locations, in said table, having all data elements with corresponding hash pointers equal to the hash pointer corresponding to the sought-for key.

The invention provides a system and method for locating entries in lookup tables faster than previously known methods that were as space efficient, while requiring less space than previously known methods that were as fast.

In the system and method of this invention, a fast lookup table is organized to use only a small amount of extra memory. The amount of memory used is proportional to the number of entries, and not to the product of the number of entries and the entry size, as in simple hash tables.

The lookup table of this invention is maintained as a vector of entries. The entries in the table are maintained in a sorted order, defined by the value of a hash on each entry's key. In a vector of size N, N entries can be maintained, in contrast to the 10-20% reserve requirement of simple hashing. An extra vector, called the offset table, of N offsets is maintained. The FIND operation hashes the key to obtain an index into the offset table and adds the offset to the original index to obtain the index into the vector of table entries where the search is to begin. Notice that the offset at the next position in the offset vector locates a place in the vector of table entries that is past all entries with keys being sought. These bounds allow FIND to discover that no entry has the sought for key without doing any searching. Therefore, FIND can use the faster binary search for the secondary searching.

This method, offset hashing, has search time on the same order as the linked hashing method; an initial hash is performed followed by the search of a bucket of entries. In the offset hashing scheme, the bucket of entries are contiguous and bounded by the offsets found in the offset table at locations h(key) and h(key) + 1. In the linked hashing scheme, the bucket of entries is a linked list. Therefore, the speed of the offset hashing scheme is as fast as the fastest of the lookup tables described above and in some cases even faster since the secondary searching is done in contiguous entries and not a linked list. Another speed advantage of the offset hashing method is the better locality of the data used by the algorithm. Good locality reduces page faults in a virtual memory system.

The binary search lookup table organization has the lowest space requirements, but is not as fast as the offset hashing method. The other hashing methods, which might be as fast as the offset hashing method, require more space. The only space overhead in the offset hashing scheme is the vector of offsets. The offsets can be quite small, smaller than the linked hashing method's links. Typical organizations of the linked hashing method require a vector of linked list anchors and links stored in each entry. The offset hashing method requires no links in each entry.

A one byte offset is adequate for even large tables. If the hash functions effectively distributes the entries into the N table slots, the worst case offsets (at the center of the table) will be normally distributed with a standard deviation, Sigma, of the square root of N, divided by 2. Since the offset can be positive or negative, one byte offsets are adequate for 4 Sigma of the cases in tables of 4096 entries, and for 2 Sigma of the cases in tables of 16384 entries. An offset of only 10 bits would cover 2 Sigma of the cases for a table of over one million entries. If the offset for some situation doesn't fit in the number of bits reserved, an escape is provided and the secondary search can be allowed to degenerate into a simple binary search on a part of the entries. A suitable escape for one byte offsets might be that an offset of +128 indicates that the sought entry is more than 127 entries forward in the table and an off set of -128 indicates that the sought entry is more than 127 entries back.

In order that the invention may be fully understood a preferred embodiment thereof will now be described, by way of example only, with reference to a further selection of the accompanying drawings in which:

Figure 5A illustrates the hash values of each of the keys used in an offset hashing lookup table according to the invention.

Figure 5B illustrates an offset hashing lookup table according to the invention.

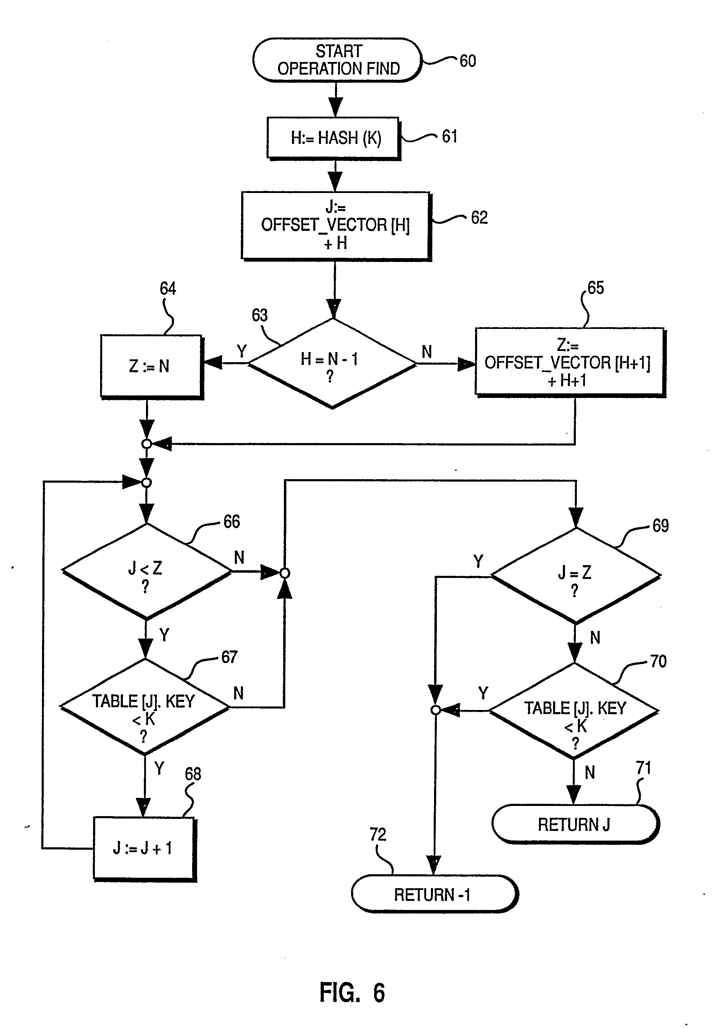

Figure 6 is a flow diagram of a find operation used to retrieve data stored in an offset lookup table according to the invention.

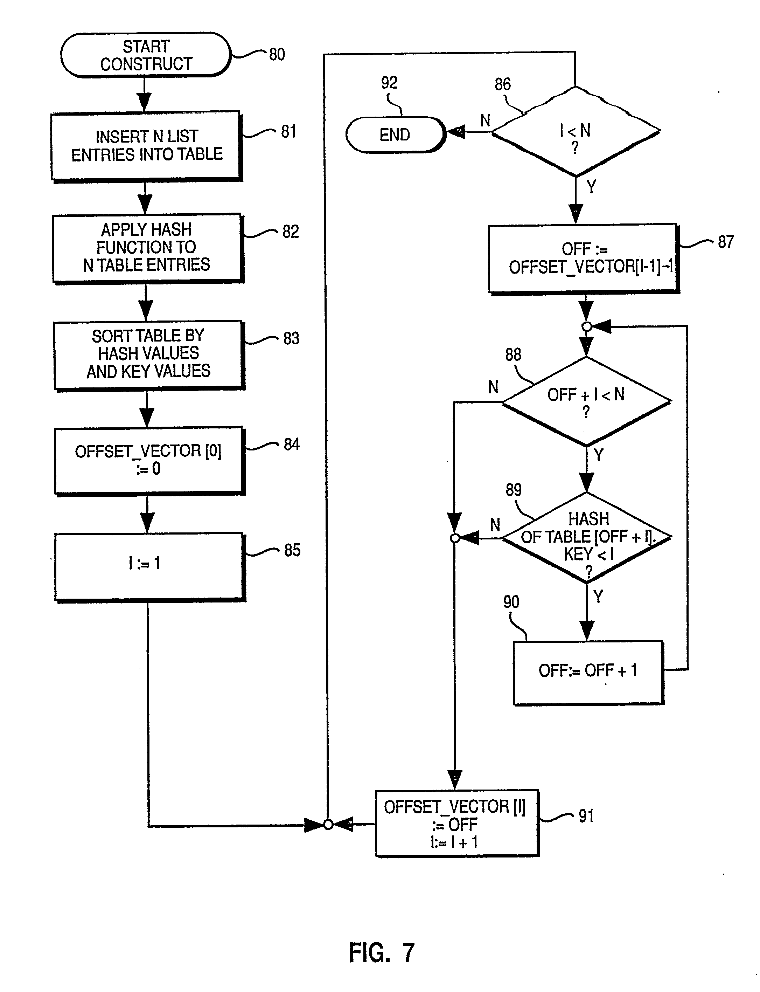

Figure 7 is a flow diagram showing the steps of creating an offset lookup table according to the invention.

In this preferred embodiment of the present invention, a hashing function is used on each key to generate a value. The hashing function used herein for illustration of the preferred embodiment is defined as follows: Hash Function

$f(A) = 1, f(B) = 2,...f(Z) = 26$
hash("ABC") = (f(A) + f(B) + f(C)) mod 10

Some sample code that calculates the above hash function value is as follows:

```
INPUT A$
SUM = 0
FOR I = 1 TO LEN(A$)
SUM = SUM + ASC( MID$(A$,I,1) ) - ASC("A") + 1
NEXT
```

PRINT SUM MOD 10

The meaning of the above hash function is that each letter of the key is given a value from 1 to 26, corresponding to that letter's position in the alphabet. The value of each of the letters in the key are added. When the summation reaches the value of the number of keys -1, the summation wraps back, beginning with the value of 0. As shown in Fig. 5A, the number of keys is 10. Therefore, the hash function generates a value from 0 to 9 for each key. Figure 5A lists the value of the hash function 13 for each key 12. To illustrate the preferred embodiment, the keys represent last names, and the associated data comprises the telephone number for each last name.

As shown in Fig. 5B, the entries 16 are maintained in the table 20 in sorted order according to the value of the hash function 13 for each entry's key 12, as listed in Fig. 5A. For example, the key "Goss", has a hash function value 13 of "0". Therefore, the "Goss" entry is listed first in the 0th location in table 20 of Fig. 58. The next hash function value is "2" which is the value for "Bledsoe", "Wilson", and "Nash". Therefore, these entries are listed next in the table 20 of Fig. 5B. Although these three entries may be in any order within the 1st, 2nd, and 3rd locations of table 20, in the preferred embodiment they are listed in alphabetical order such that "Bledsoe" occupies the 1st location, "Nash" occupies the 2nd location, and "Wilson" occupies the 3rd location. This allows a binary search or a sorted linear search to be performed within the offset hashing lookup table during a FIND operation if several keys hash to the same value.

Referring back to Fig. 5A, the next sequential hash value after the value of "2", is the value of "5" which is the hash value for both the "Johnson" key and the "Olson" key. Again, organizing the table 20 for binary searching within the same hash values, the keys are sorted alphabetically. Therefore, "Johnson" occupies the next available entry which is the 4th location, and "Olson" occupies the next entry, which is the 5th location, of table 20, Fig. 5B.

Likewise, since the next sequential hash value is "6" from Fig. 5A, the key "Turner" occupies the next location. Since the next sequential hash value is "8", "Backlund" and "Morgan" are sorted alphabetically among themselves and occupy the next sequential locations of table 20. The next and final sequential hash value is "9", which is the hash value for key "Smith". Therefore, key "Smith" is located in the last entry of table 20.

An offset vector 22, Fig. 5B, is then constructed with locations numbered 0 to N-1, where N is the number of entries in table 20. The FIND operation hashes the key to obtain an index into the offset table. The value 24 at each location (location 0 to location N-1) points to the first entry in table 20 which has a hash value greater than or equal to the location "i" in offset vector 22. For each "ith" location of offset vector vector 22, the value 24 at location "i" added to "i" 23 is the index of the first entry in the lookup table with hash value greater than or equal to "i". This is shown as follows:

offset vector[i] + i = index of first entry in table with hash value > or = i

For example, if a sought for key hashed to a value of "0", the value at the "0th" location of the offset vector 22 would be added to "0". Since 0 + 0 = 0, the 0th location of table 20 contains the first entry which has a hash value greater than or equal to "0". If the sought for key hashed to a value of "1", the value at the 1st location of the offset vector 22 would be added to "1". Since the value of the 1st location is "0", and 0 + 1 = 1, the lst location of table 20 is the first entry in table 20 with a hash value greater than or equal to 1. Since the hash value of "Bledsoe" is "2", it is immediately known that the sought for key which hashed to the value of "1" is not found in the table 20.

As further examples, during a FIND operation if the sought for key hashes to a value of 2, the value at location 2 in the offset vector is added to 2. Since the value at location 2 is a -1, and 2 + -1 = 1, then the 1st location in table 20 contains the first entry with a hash value of 2 or more. Starting at location 1 in table 20 a search can be made within the other entries that have a hash value of 2 to find the sought for key. For example, if the sought for key was "Cox", the search would terminate since if the sought for key "Cox" was in table 20, it would have been between the keys "Bledsoe" and "Nash".

In another example, if the sought for key hashes to a value of 3, the values at location 3 in the offset vector 22 is added to 3. Since the value at location 3 is + 1, and 3 + 1 = 4, then the 4th location in table 20 contains the first entry with a hash value of 3 or more. Since none of the keys hashed to either a value of 3 or 4, the entry at the 4th location has a hash value of 5. Therefore, if the sought for key has a hash value of three, and the FIND operation goes to the first entry which has a greater hash value, it is immediately known that the sought for key is not in the table 20. Therefore, the FIND operation can discover that no entry has the sought for key without doing any searching.

For example, as shown in Fig. 5B, the entries in table 28 are bounded by the offsets, shown as arrows 25, in offset table 22 at locations h(key) and h(key) + 1. For example, a key having a hash value of 0 is bounded by location 0 and the beginning of location 1 of table 20. A key having a hash value of 1 has both an upper and lower bound of tile beginning of location 1. Therefore, it is immediately known that no entry in table 20 has a hash value of 1 without doing any searching.

The offset hashing lookup table 20 of Fig. 5B, uses only a small amount of extra memory for the offset vector 22. The only space overhead in this offset hashing scheme is the vector of offsets. The offsets can be quite small, smaller than the link list in the linked hashing method of Fig. 4J. The amount of memory for offset vector 22 of Fig. 5B is less than the extra memory needed for the link 15 and the linked list 18 of Fig. 4J. Typical organizations of the linked hashing method of Fig. 4J require a vector of linked list anchors and links 15 stored in each entry. The offset hashing method of this invention requires no links in each entry, which minimizes the amount of additional memory needed. In addition, the amount of memory needed for the offset vector 22 is typically less than the 10% to 20% of extra memory needed for the open addressing hashing lookup table of Fig. 3A -Fig. 3J.

The size of the entries in the offset vector needs to be no larger than required to reference the first table entry of the corresponding range of keys having the same hash value. As previously indicated, these offsets will usually be small. In the unusual case that the space reserved for the offset vector does not provide an adequate offset for a particular hash value, there are several possible solutions. A new hash function can be chosen and applied to the table entries; this may result in offsets that will fit into the available offset vector space. Another solution is to reserve the maximum magnitude offset values (both positive and negative) to indicate that the offset is greater than can be contained in the offset vector. If this happens, the search range is larger than specified by the offset and includes hash values other than those of the sought for key.

In the case where the table is not entirely full, unused table entries can be indicated with a reserved key value larger than any possible sought for key or each table entry can have a flag that indicates whether it is in use or not.

The offset hashing method of this invention as shown in Fig. 5B, has a search time on the same order as the linked hashing method of Fig. 4J. Both perform an initial hash, followed by a search of a bucket of entries. However, in the offset hashing method of this invention, the entries with the same hash value are contiguous, and bounded by the offsets found in the offset table at locations h(key) and h(key) + 1. Therefore, the offset hashing method may be faster since the secondary searching in the table 28 is done in contiguous entries, and not a linked list. The contiguous entries having the same hash value gives another speed advantage of the offset hashing method. Also, the good locality of the data used by the method of this invention reduces page faults in a virtual memory system.

The following programming design language code illustrates the creation of the offset lookup table of this invention.

```
procedure construct
        -- constructs an offset lookup table of size
        -- N from a list of N entries that are to be
        -- stored in the table
begin

        insert the N entries from the list into the
        table;

        apply the hash function to the keys of each
        of the table entries;

        sort the table entries by hash value and
        within the same hash value by key value;

        -- now build the offset vector
        OFFSET_VECTOR[0] := 0;
        for I = 1 to N-1 do
                OFFSET_VECTOR[I] := OFFSET_VECTOR[I-1] - 1;

                while OFFSET_VECTOR[I] + I < N
                and HASH(TABLE[OFFSET_VECTOR[I]+I].KEY)
                        < I
                do
                        OFFSET_VECTOR[I] =
                                OFFSET_VECTOR[I] + 1;
                end while;


        end for;


end procedure construct;
```

The above programming design language is illustrated in Fig. 7. The construction of the offset lookup table begins at step 80, with a list of N entries. These entries are inserted into the table, step 81. The hash function is applied to each of these N table entries, step 82. The table is sorted by hash values, and between entries of the same hash value the table is sorted bY key value, step 83. The construction of the table entries is now complete. Steps 84 - 92 construct the offset vector. The first entry in the offset vector, at index 0, is set to 0, step 84. Initialize I, an index into the offset vector, to 1, step 85. While I is less than N, step 86, continue with steps 87 - 91; otherwise, construction of the offset vector is complete, and the procedure ends at step 92. In step 87, an initial value of the offset vector indexed by I is obtained from the value of the offset vector indexed by I-1, minus one. This value, OFF, is incremented in step 90 until the sum OFF plus I equals N, step 88, or the hash of the key for the table entry stored at index OFF plus I is greater than or equal to I, step 89. After finishing the incrementing of OFF in steps 88, 89, and 90, the offset vector entry at index I is assigned the value of OFF and I is incremented by 1 to index the next entry in the offset vector, step 91.

The following programming design language code illustrates the implementation of a find operation that can be used to search for, locate, or retrieve data associated with a sought for key:

```
operation find(K)
        -- Returns index of table entry with key
        -- equal to K, the sought for key, if the
        -- table has such an entry; otherwise, it
        -- returns -1.
begin
        -- Assume that the data has a structure
```

```
                    -- with an offset_vector and a table of
                    -- length N both indexed by values from 0 to
                    -- N-1.


                    H := HASH(K);    -- note H is in range 0..N-1


                    -- set J to index of first entry that
                    -- could have sought for key
                    J := OFFSET_VECTOR[H] + H;


                    -- limit Z is set to one more than the index
                    -- of the last entry that could have sought
                    -- for key
                    if H = N-1
                        then Z := N
                        else Z := OFFSET_VECTOR[H+1] + H+1;


                    -- search range from J to Z-1 for K
                    while J < Z and TABLE[J].KEY < K do
                        J := J + 1;


                    -- was K found?
                    if J = Z or TABLE[J].KEY > K
                        then return -1       -- FAILURE
                        else return J;       -- SUCCESS


            end operation find;
```

The above programming design language code is illustrated in Fig. 6. The find operation begins at step 60 with K the sought for key. The sought for key is hashed to a hash value, step 61. The hash value will be between 0 and N-1 for a table of N entries. The first entry in the table that could possibly have the sought for key is determined by step 62, and assigned to the variable J. In step 62, the hash value is used to index into the offset vector. The value in the offset vector at this index is added to the hash value to determine the first entry. The last entry in the table that could have the sought for key is determined by steps 63, 64, and 65, which set the variable Z to one more than the last entry's table index. Steps 66, 67, and 68 search the entries with indices between J and Z-1 stopping as soon as the sought for key is found, step 67, or when it is determined that all entries in this range have been examined, step 66, or when it is clear that the key will not be found in the remaining entries in the range, step 67. A test is made to determine the outcome of this search, steps 69 and 70. If it is determined in step 69 that all entries were searched unsuccessfully, a -1 is returned to indicate failure, step 72. If it is determined in step 70 that the sought for key was found, J, the index of the table entry with this key, is returned, step 71; otherwise, a -1 is returned to indicate failure, step 72.

10

**Claims**

1. A data processing system comprising:
means for hashing a key for each of a plurality (N) of entries of information to be stored in the data processing system;
means for storing said information in a first vector of said entries in a sorted order according to each resulting hash pointer of said hashed keys; and
means for creating a vector of offsets for combining with the hash pointer of a sought-for key to determine a set of locations, in said table, having all data elements with corresponding hash pointers equal to the hash pointer corresponding to the sought-for key.

2. A data processing system as claimed in claim 1 in which said vector of offsets comprises N entries such that a sum of the contents at a position "i" and "i" is an index that determines the first entry in the first vector having a hash pointer greater than or equal to "i".

3. A data processing system as claimed in claim 2, further comprising:
means for hashing a sought for key of said information to one of said "ith" locations of said offset vector; and
means for retrieving the information from said first vector as indicated by said hashed to "ith" location of said offset vector.

4. A data processing system as claimed in any preceding claim wherein the means for storing further comprises means for sorting all entries having the same hash pointer according to the keys corresponding to said entries.

5. A data processing system comprising:
means for storing a plurality of data elements in a table, wherein each of the data elements includes a retrieval key;
means for determining a plurality of calculated hash pointers, wherein a calculated hash pointer corresponding to each of the plurality of data elements is calculated from the retrieval key of that data element, and wherein each calculated hash pointer is one of a predetermined selection of possible hash pointer values;
means for sorting the table of data elements in a numerical order according to the hash pointer corresponding to each data element, thereby producing a sorted table; and
means for calculating an offset vector having a plurality of entries, wherein each calculated hash pointer value relates to a corresponding entry in the offset vector, and wherein each individual entry comprises a numerical offset pointer, said offset pointer being dependent upon that entry's corresponding calculated hash pointer value and upon the address, in the sorted table, of a data element at a boundary of the one or more data elements having said corresponding calculated hash pointer value.

6. A data processing system as claimed in claim 5, wherein each possible hash pointer value relates to a corresponding entry in the offset vector;
and wherein, for each possible hash pointer value in said selection which is not one of said calculated hash pointer values, the corresponding offset vector entry comprises a numerical offset pointer, said offset pointer being dependent upon that entry's corresponding possible hash pointer value and upon the address, in the sorted table, of a data element at a boundary of the one or more data elements having a calculated hash pointer value which is closest, in a predetermined direction in said numerical order, to said possible hash pointer value.

7. A data processing system as claimed in claim 5 or claim 6 in which:
the sorting means sorts the table of data elements according to an ascending numerical order of hash pointers corresponding to each data element;
the retrieval key corresponding to each data element comprises one or more alphanumerical characters; and
each of the offset pointers represents the numerical difference between the hash pointer value corresponding to that offset pointer and the address, in the sorted table, of the first data element having a hash pointer greater than or equal to the hash pointer value corresponding to that offset pointer.

8. A data processing system as claimed in claim 6 or claim 7, further comprising:
means for calculating a sought-for hash pointer from a sought-for retrieval key;
means for combining the sought-for hash pointer and an adjacent hash pointer value in said numerical order with the corresponding offset pointers, to obtain a start-search address and a stop-search address respectively wherein the start-search address and the stop-search address define boundaries in the sorted table, between which boundaries any data elements having a hash pointer equal to the sought-for hash pointer lie; and
means responsive to the combining means for comparing the retrieval key of one or more data elements, in the sorted table between the start-search address and the stop-search address, with the sought-for retrieval key.

9. A data processing system as claimed in any of claims 5 to 8, in which the means for sorting further comprises:

means for detecting whether a plurality of data elements have the same hash pointer value; and

means, responsive to the detecting means, for sorting said plurality of data elements according to the retrieval key corresponding to each data element.

10. A method for storing information in a data processing system, said method comprising:

hashing a key for each of a plurality (N) of entries of said information to a hash pointer;

storing said information in a first vector of said entries in a sorted order according to each resulting hash pointer of said hashed keys; and

creating a vector of offsets for combining with the hash pointer of a sought-for key to determine a set of locations, in said table, having all data elements with corresponding hash pointers equal to the hash pointer corresponding to the sought for key.

12 KEY  14 DATA  10

| KEY | DATA |
|-----|------|
| JOHNSON | 233-7011 |
| BACKLUND | 711-7101 |
| SMITH | 253-3092 |
| GOSS | 449-5759 |
| BLEDSOE | 454-8811 |
| OLSON | 861-0088 |
| TURNER | 971-5544 |
| WILSON | 812-8322 |
| NASH | 430-0176 |
| MORGAN | 901-9100 |

16 16 16 16 16

**FIG. 1**

12 KEY  14 DATA  10

| KEY | DATA |
|-----|------|
| BACKLUND | 711-7101 |
| BLEDSOE | 454-8811 |
| GOSS | 449-5759 |
| JOHNSON | 233-7011 |
| MORGAN | 901-9100 |
| NASH | 430-0176 |
| OLSON | 861-0088 |
| SMITH | 253-3092 |
| TURNER | 971-5544 |
| WILSON | 812-8322 |

**FIG. 2**

12 KEY  13 h (KEY)

| KEY | h (KEY) |
|-----|---------|
| JOHNSON | 11 |
| BACKLUND | 8 |
| SMITH | 9 |
| GOSS | 0 |
| BLEDSOE | 2 |
| OLSON | 3 |
| TURNER | 0 |
| WILSON | 8 |
| NASH | 6 |
| MORGAN | 8 |

**FIG. 3K**

12 KEY  13 h (KEY)

| KEY | h (KEY) |
|-----|---------|
| JOHNSON | 5 |
| BACKLUND | 8 |
| SMITH | 9 |
| GOSS | 0 |
| BLEDSOE | 2 |
| OLSON | 5 |
| TURNER | 6 |
| WILSON | 2 |
| NASH | 2 |
| MORGAN | 8 |

**FIG. 4A**

FIG. 3A

FIG. 3B

FIG. 3C

FIG. 3D

FIG. 3E

FIG. 3F

| | 12 | 14 | 11 |
|---|---|---|---|
| 0 | GOSS | | |
| 1 | TURNER | | |
| 2 | BLEDSOE | | |
| 3 | OLSON | | |
| 4 | | | |
| 5 | | | |
| 6 | | | |
| 7 | | | |
| 8 | BACKLUND | | |
| 9 | SMITH | | |
| 10 | | | |
| 11 | JOHNSON | | |

**FIG. 3G**

| | 12 | 14 | 11 |
|---|---|---|---|
| 0 | GOSS | | |
| 1 | TURNER | | |
| 2 | BLEDSOE | | |
| 3 | OLSON | | |
| 4 | | | |
| 5 | | | |
| 6 | | | |
| 7 | | | |
| 8 | BACKLUND | | |
| 9 | SMITH | | |
| 10 | WILSON | | |
| 11 | JOHNSON | | |

**FIG. 3H**

| | 12 | 14 | 11 |
|---|---|---|---|
| 0 | GOSS | | |
| 1 | TURNER | | |
| 2 | BLEDSOE | | |
| 3 | OLSON | | |
| 4 | | | |
| 5 | | | |
| 6 | NASH | | |
| 7 | | | |
| 8 | BACKLUND | | |
| 9 | SMITH | | |
| 10 | WILSON | | |
| 11 | JOHNSON | | |

**FIG. 3I**

| | 12 | 14 | 11 |
|---|---|---|---|
| 0 | GOSS | | |
| 1 | TURNER | | |
| 2 | BLEDSOE | | |
| 3 | OLSON | | |
| 4 | MORGAN | | |
| 5 | | | |
| 6 | NASH | | |
| 7 | | | |
| 8 | BACKLUND | | |
| 9 | SMITH | | |
| 10 | WILSON | | |
| 11 | JOHNSON | | |

**FIG. 3J**

| KEY (12) | h (KEY) (13) |
|---|---|
| JOHNSON | 5 |
| BACKLUND | 8 |
| SMITH | 9 |
| GOSS | 0 |
| BLEDSOE | 2 |
| OLSON | 5 |
| TURNER | 6 |
| WILSON | 2 |
| NASH | 2 |
| MORGAN | 8 |

**FIG. 5A**

FIG. 4B

FIG. 4C

FIG. 4D

FIG. 4E

**FIG. 4F**

Index 18: 0→3, 2→4, 5→0, 8→1, 9→2

| | KEY (12) | (14) | (15) |
|---|---|---|---|
| 0 | JOHNSON | | |
| 1 | BACKLUND | | |
| 2 | SMITH | | |
| 3 | GOSS | | |
| 4 | BLEDSOE | | |
| 5 | | | |
| 6 | | | |
| 7 | | | |
| 8 | | | |
| 9 | | | |

(17)

**FIG. 4G**

Index 18: 0→3, 2→4, 5→0, 8→1, 9→2

| | KEY (12) | (14) | (15) |
|---|---|---|---|
| 0 | JOHNSON | | 5 |
| 1 | BACKLUND | | |
| 2 | SMITH | | |
| 3 | GOSS | | |
| 4 | BLEDSOE | | |
| 5 | OLSON | | |
| 6 | | | |
| 7 | | | |
| 8 | | | |
| 9 | | | |

(17)

**FIG. 4H**

Index 18: 0→3, 2→4, 5→0, 6→6, 8→1, 9→2

| | KEY (12) | (14) | (15) |
|---|---|---|---|
| 0 | JOHNSON | | 5 |
| 1 | BACKLUND | | |
| 2 | SMITH | | |
| 3 | GOSS | | |
| 4 | BLEDSOE | | 7 |
| 5 | OLSON | | |
| 6 | TURNER | | |
| 7 | WILSON | | |
| 8 | | | |
| 9 | | | |

(17)

**FIG. 4I**

Index 18: 0→3, 2→4, 5→0, 6→6, 8→1, 9→2

| | KEY (12) | (14) | (15) |
|---|---|---|---|
| 0 | JOHNSON | | 5 |
| 1 | BACKLUND | | |
| 2 | SMITH | | |
| 3 | GOSS | | |
| 4 | BLEDSOE | | 7 |
| 5 | OLSON | | |
| 6 | TURNER | | |
| 7 | WILSON | | 8 |
| 8 | NASH | | |
| 9 | | | |

(17)

| | 18 | | KEY 12 | 14 | 15 | 17 |
|---|---|---|---|---|---|---|
| 0 | 3 | 0 | JOHNSON | | 5 | |
| 1 | -1 | 1 | BACKLUND | | 9 | |
| 2 | 4 | 2 | SMITH | | -1 | |
| 3 | -1 | 3 | GOSS | | -1 | |
| 4 | -1 | 4 | BLEDSOE | | 7 | |
| 5 | 0 | 5 | OLSON | | -1 | |
| 6 | 6 | 6 | TURNER | | -1 | |
| 7 | -1 | 7 | WILSON | | 8 | |
| 8 | 1 | 8 | NASH | | -1 | |
| 9 | 2 | 9 | MORGAN | | -1 | |

## FIG. 4J

| 23 | OFFSET VECTOR 22 | | KEY 12 | DATA 20 14 |
|---|---|---|---|---|
| _i_ | | 25 → | | |
| 0 | 0 | 24 | GOSS | 449-5759 |
| 1 | 0 | | BLEDSOE | 454-8811 |
| 2 | -1 | 24 25 | NASH | 430-0176 |
| 3 | +1 | 16 | WILSON | 812-8322 |
| 4 | 0 | | JOHNSON | 233-7011 |
| 5 | -1 | 24 | OLSON | 861-0088 |
| 6 | 0 | | TURNER | 971-5544 |
| 7 | 0 | 24 | BACKLUND | 711-7101 |
| 8 | -1 | | MORGAN 16 | 901-9100 |
| (N-1) 9 | 0 | 28 | SMITH | 253-3092 |

## FIG. 5B

START
OPERATION FIND — 60

H:= HASH (K) — 61

J:=
OFFSET_VECTOR [H]
+ H — 62

64

Z := N

63

H = N - 1
?

Y

N

65

Z:=
OFFSET_VECTOR [H+1]
+ H+1

66

J < Z
?

N

Y

67

TABLE [J]. KEY
< K
?

N

Y

68

J := J + 1

69

J = Z
?

Y

N

70

TABLE [J]. KEY
< K
?

Y

N

71

RETURN J

72

RETURN -1

FIG. 6

START
CONSTRUCT ⟩— 80

INSERT N LIST
ENTRIES INTO TABLE — 81

APPLY HASH
FUNCTION TO
N TABLE ENTRIES — 82

SORT TABLE BY
HASH VALUES
AND KEY VALUES — 83

OFFSET_VECTOR [0]
:= 0 — 84

I := 1 — 85

92
END

86
I < N
?
N
Y

OFF :=
OFFSET_VECTOR[I-1]-I — 87

88
OFF + I < N
?
N
Y

89
HASH
OF TABLE [OFF + I].
KEY < I
?
N
Y

90
OFF:= OFF + 1

OFFSET_VECTOR [I]
:= OFF
I:= I + 1 — 91

FIG. 7